(19) Europäisches Patentamt
European Patent Office
Office européen des brevets

(11) **EP 1 845 120 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**19.12.2012 Patentblatt 2012/51**

(45) Hinweis auf die Patenterteilung:
**17.06.2009 Patentblatt 2009/25**

(21) Anmeldenummer: **07006485.2**

(22) Anmeldetag: **29.03.2007**

(51) Int Cl.:
*C08G 18/08* (2006.01)    *C08G 18/12* (2006.01)
*C08G 18/28* (2006.01)    *C09D 175/04* (2006.01)

(54) **Wässrige polyurethan-Dispersionen mit verbesserter Lagerstabilität**

Aqueous polyurethane dispersions with improved storage stability

Dispersions de polyuréthane liquide à stabilité de stockage améliorée

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**RS**

(30) Priorität: **11.04.2006 DE 10617385**

(43) Veröffentlichungstag der Anmeldung:
**17.10.2007 Patentblatt 2007/42**

(73) Patentinhaber: **Bayer MaterialScience AG**
**51368 Leverkusen (DE)**

(72) Erfinder:
• **Gertzmann, Rolf, Dr.**
**51377 Leverkusen (DE)**
• **Irle, Christoph, Dr.**
**08037 Barcelona (ES)**
• **Roschu, Rolf**
**47877 Willich (DE)**

(56) Entgegenhaltungen:
**EP-A- 1 717 257**    **EP-A- 1 717 284**
**EP-A1- 1 717 257**    **EP-A1- 1 717 294**
**US-A- 5 693 703**    **US-A- 5 693 703**
**US-B1- 6 559 225**

• **NANDA ET AL: "The influence of the ionic concentration, concentration of the polymer, degree of neutralization and chain extension on aqueous polyurethane dispersions prepared by the acetone process" 8. März 2006 (2006-03-08), POLYMER, ELSEVIER SCIENCE PUBLISHERS B.V, GB, PAGE(S) 1805-1811 , XP005326010 ISSN: 0032-3861 * Seite 1808, rechte Spalte - Seite 1809, linke Spalte ***

EP 1 845 120 B2

**Beschreibung**

Die Erfindung betrifft wässrige Polyurethadispersionen mit hohem Hartsegmentanteil und verbesserter Lagerstabilität, ein Verfahren zu deren Herstellung sowie daraus hergestellte Beschichtungsmittel.

Mit dem Ziel die Emissionen organischer Lösemittel zu senken, werden zunehmend wässrige Beschichtungsmittel anstelle lösemittelhaltiger Systeme eingesetzt. Eine wichtige Klasse wässriger Lackbindemittel sind die bereits im Stand der Technik umfassend beschriebenen Polyurethandispersionen. Prinzipiell ist es möglich sowohl nach dem Aceton- als auch nach dem Prepolymermischverfahren lösemittelfreie Polyurethandispersionen (im folgenden PUD genannt) zu erhalten.

In vielen Polyurethanen findet sich N-Methylpyrrolidon (NMP) als Lösemittel, da es gegenüber Isocyanatgruppen unreaktiv ist und somit geeignet ist die Viskosität beim Prepolymeraufbau zu reduzieren. Darüber hinaus ist NMP in der Lage die vielfach in der PUD-Chemie verwendete hochschmelzende Dimethylolpropionsäure zu lösen. Durch die Verwendung von NMP wird gewährleistet, dass ausreichend viele hydrophile Zentren in Form von Carboxylat-Gruppen in ökonomisch vertretbarer Reaktionszeit in das Polyurethan-Gerüst eingebaut werden. Allerdings hat sich gezeigt, dass NMP als fruchtschädigende Substanz einzustufen ist und somit ein Ersatz für dieses Lösungsmittel erforderlich ist.

Versuche NMP quantitativ durch destillativ entfernbare Lösungsmittel wie Aceton oder Methylethylketon bei der Herstellung ionisch hydrophilierter Polyurethandispersionen mit Diolgehalten, bezogen auf Diole mit mittleren Molgewichten $M_n$ von 62 g/mol bis 500 g/mol, von größer 5 Gew.-% und Hartsegmentgehalten von 55 bis 85 Gew.-% zu ersetzen, haben zu Produkten mit unzureichender Lagerstabilität geführt, wenn auf das krebserregende Hydrazin im Kettenverlängerungsschritt verzichtet wurde. Hydrazin wird vielfach in der Synthese von sowohl NMPhaltigen als auch lösemittelfreien Polyurethandispersionen verwendet, um eine verbesserte Vergilbungsbeständigkeit der daraus erhaltenen Beschichtungen zu realisieren. Eine Stabilisierung der Dispersionpartikel, insbesondere von Dispersionspartikeln aus sehr harten Polyurethanen durch Hydrazin wurde bisher nicht beobachtet.

In der EP-A 801 086 werden FDA konforme Polyurethandispersionen beansprucht, die keine freien Amine aufweisen. Dies wurde erreicht, indem isocyanatgruppenfunktionelle (NCO)-Prepolymere mit Mono- und Polyaminen kettenverlängert wurden. Die zur Herstellung der Dispersion notwendigen NCO-Prepolymere enthalten 0,1 bis 5,0 Gew.-% Diole mit OH-Zahlen zwischen 111 und 1250 und weisen nach der Kettenverlängerung nur geringe Härten auf, die den Anforderungen in vielen Bereichen, wie z.B. der Lackierung von Fußbodenbelägen nicht genügen.

Die DE 199 30 96 1 A1 beschreibt N-Methylpyrrolidon enthaltene Polyurethan-Dispersionen, die gegebenenfalls auch Hydrazinhydrat aufweisen. N-Methylpyrrolidon lässt sich nicht aus diesen Dispersionen nur unter großem Aufwand entfernen. Die DE 10 2005 0 19397 A1 ist Stand der Technik nach § 3(2) Nr. 1 PatG. Die darin beschriebenen Polyurethan-Dispersionen mit verbesserten Verfilmungseigenschaften enthalten Hydrazinhydrat.

Die Aufgabe der vorliegenden Erfindung bestand in der Bereitstellung von ionisch hydrophilierten Polyurethandispersionen, die lösemittel- und NMP-frei sind, ohne Hydrazin hergestellt werden und eine Lagerstabilität von mindestens 6 Wochen bei 40°C aufweisen. Darüber hinaus sollten die Beschichtungsmittel, basierend auf den erfindungsgemäßen Polyurethandispersionen, und die daraus hergestellten Beschichtungen ebenso gute Beständigkeiten gegen Chemikalien und Wasser sowie Härten über 90 Pendelsekunden aufweisen.

Überraschenderweise konnte diese Aufgabe durch Einsatz gegenüber Isocyanaten monofunktioneller Komponenten wie Monoalkohole mit mittleren Molgewichten $M_n$ von 32 g/mol bis 145 g/mol und/oder Monoaminen g) mit mittleren Molgewichten $M_n$ von kleiner 147 g/mol gelöst werden.

Gegenstand der vorliegenden Erfindung sind somit wässrige Polyurethandispersionen (I) gemäß Anspruch 1.

Bevorzugt enthält das Harz der erfindungsgemäßen Polyurethandispersion (I) einen Gehalt an Komponente c) von 9 bis 17 Gew. % und einen Hartsegmentgehalt (HS) von 58 bis 80 Gew.-% und bevorzugt von 60 bis 75 Gew.-%, wobei die Isocyanatmenge bezogen auf die Feststoffmenge 35 bis 55 Gew.-%, bevorzugt 38 und 50 Gew.-%, besonders bevorzugt 40 bis 48 Gew.-% beträgt. Die Säurezahl des Festharzes liegt zwischen 11 und 30 mg KOH/g Festharz, bevorzugt zwischen 13 und 28 mg KOH/g Festharz und besonders bevorzugt zwischen 15 und 27 mg KOH/g Festharz.

Der Hartsegmentgehalt berechnet sich wie folgt:

$$HS = \frac{100 * [\sum \text{Masse } (a, c, d, e, f, g)]}{\sum \text{Masse } (a, b, c, d, e, f, g)}$$

Die erfindungsgemäße Polyurethandispersion enthält maximal 0,9 Gew.-%, bevorzugt maximal 0,5 Gew.-% an organischen Lösungsmitteln. Die erfindungsgemäße Polyurethandispersion ist darüber hinaus frei von N-Methylpyrrolidon (NMP).

Als Komponente a) sind die üblicherweise in der Polyurethanchemie eingesetzten Polyisocyanate geeignet, wie beispielsweise Diisocyanate der Formel $R^1(NCO)_2$, wobei $R^1$ für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele für bevorzugte Diisocyanate sind Tetramethylendiisocyanat, Hexamethylendiisocyanat, 4,4'-Diisocyanatodiphenylmethan, 2,4'-Diisocyanatodiphenylmethan, 2,4-Diisocyanatotoluol, 2,6-Diisocyanatotoluol oder $\alpha,\alpha,\alpha,'\alpha,'$-Tetra-methyl-$m$- oder p-xylylendiisocyanat sowie Mischungen der genannten Diisocyanate. Besonders bevorzugte Diisocyanate sind 1-Isocyanato-3,3,5-trimethyl-5-isocyanatomethylcyclohexan (Isophorondiisocyanat) und 4,4'-Diisocyanatodi-cyclohexylmethan.

Gegebenenfalls können kleine Mengen von z.B. drei- und/oder höherwertige Isocyanate eingesetzt werden, um somit einen gewissen Verzweigungs- oder Vernetzungsgrad des Polyurethans zu gewährleisten. Die Menge des einzusetzenden Polyisocyanats richtet sich nach seiner Funktionalität und ist so zu bemessen, dass das NCO-Prepolymer noch rührbar und dispergierbar bleibt. Derartige Isocyanate werden z.B. erhalten, indem zweiwertige Isocyanate derart miteinander umgesetzt werden, dass ein Teil ihrer Isocyanatgruppen zu Isocyanurat-, Biuret-, Allophanat-, Uretdion- oder Carbodiimidgruppen derivatisiert werden. Auch solche über ionische Gruppen hydrophilierte Polyisocyanate, wie sie üblicherweise als Vernetzer in wässrigen Zweikomponenten-(2K)-PUR-Lacken eingesetzt werden, sind geeignet. Beispiele für solche Isocyanate sind in der EP-A510438 beschrieben, in welcher Polyisocyanate mit OHfunktionellen Carboxylverbindungen umgesetzt werden. Hydrophilierte Polyisocyanate werden weiterhin durch Umsetzung von Polyisocyanaten mit gegenüber Isocyanaten reaktiven Verbindungen, die schwefelsaure Gruppen tragen erhalten. Derartige Polyisocyanate können hohe Funktionalitäten, z.B. von mehr als 3 aufweisen.

Geeignete polymere Polyole b) weisen einen Molgewichtsbereich ($M_n$) von 500 bis 6000 g/mol, bevorzugt von 500 bis 3000 g/mol und besonders bevorzugt von 650 bis 2500 g/mol auf. Die OH-Funktionalität beträgt mindestens 1,8 bis 3, bevorzugt 1,9 bis 2,2 und besonders bevorzugt 1,92 bis 2,0. Es handelt sich bei den Polyolen zum Beispiel um Polyester, Polyether auf Basis von Propylenoxid und/oder Tetrahydrofuran, Polycarbonate, Polyestercarbonate, Polyacetale, Polyolefine, Polyacrylate und Polysiloxane. Bevorzugt werden Polyester, Polyether, Polyestercarbonate und Polycarbonate eingesetzt. Besonders bevorzugt sind Polyester, Polyether, Polyestercarbonate und Polycarbonate mit OH-Funktionalitäten zwischen 1,92 und 2,0. Mischungen der beschriebenen polymeren Polyole b) sind ebenfalls geeignet.

Die erfindungsgemäße Polyurethandispersion enthält (I) nur die Komponente b) in Mengen von 20 bis 42 Gew.-% und besonders bevorzugt von 25 bis 40 Gew.-% bezogen auf (I).

Niedermolekulare Polyole c) mit einem Molekulargewichtsbereich ($M_n$) von 62 bis 500 g/mol, bevorzugt 62 bis 400 g/mol und besonders bevorzugt 90 bis 300 g/mol sind die üblicherweise in der Polyurethanchemie eingesetzten bifunktionellen Alkohole, wie z.B. Ethandiol, 1,2- und 1,3-Propandiol, 1,2-, 1,3- und 1,4-Butandiol, 1,5-Pentandiol, 3-Methyl-pentandiol-1,5, 1,6-Hexandiol, Neopentylglykol, Cyclohexan-1,4-dimethanol, 1,2- und 1,4-Cyclohexandiol, 2-Ethyl-3-propylpentandiol, 2,4-Dimethylpentandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole, N-substituierte Ethanolamine sowie Mischungen dieser Produkte. Bevorzugte Polyole c) sind 1,4-Butandiol, 1,5-Pentandiol, 3-Methyl-pentandiol-1,5, 1,6-Hexandiol, Neopentylglykol, Cyclohexan-1,4-dimethanol, 1,2- und 1,4-Cyclohexandiol sowie N-substituierte Ethanolamine. Ganz besonders bevorzugte Polyole c) sind 1,4-Butandiol, 1,6-Hexandiol, Neopentylglykol sowie N-substituierte Ethanolamine.

Tri- und höherfunktionelle Alkohole des angegebenen Molekulargewichtsbereichs können anteilig in der Menge mitverwendet werden, dass die Polymerlösung rührbar bleibt. Zu solchen Komponenten zählen Trimethylolpropan, Glycerin, sowie Pentaerythritol.

Zusätzlich können in Abmischung mit den genannten Polyolen c) auch fettsäurehaltige Polyester c1) mit Molgewichten < 500 g/mol eingesetzt werden, die durch Ver- oder Umesterungsprodukt(e) von trocknenden und/oder nichttrocknenden Fettsäuren bzw. Ölen mit mindestens bifunktionellen Polyolverbindungen erhalten werden, wie sie z.B. in der EP-A 0 017 199 (S. 10, Z. 27 bis S. 11, Z. 31) beschrieben sind. Als Polyolverbindungen werden bevorzugt tri- und tetrafunktionelle Hydroxylkomponenten wie z.B. Trimethylolethan, Trimethlyolpropan, Glycerin oder Pentaerythritol verwendet.

Die Mengen der Komponenten c) und c1) werden so bemessen, dass deren Summe gemessen am Harz der Polyurethandispersion (I) 5 bis 22 Gew.-%, bevorzugt, 7 bis 20 Gew.-% und besonders bevorzugt 9 bis 17 Gew. % beträgt. Das Verhältnis von c) zu c1) reicht von 100 : 0 bis 20 : 80, bevorzugt von 100 : 0 bis 30 : 70 und besonders bevorzugt von 100 : 0 bis 40 : 60.

In einer bevorzugten Ausführungsform wird lediglich die Komponente c) in Mengen von 5 bis 22 Gew.-%, bevorzugt 7 bis 20 Gew.-% und besonders bevorzugt 9 bis 17 Gew.-%, gemessen am Harz der Polyurethandispersion (I), verwendet.

Als Komponente d) sind niedermolekulare Verbindungen, die ionische Gruppen enthalten oder zur Ausbildung einer ionischen Gruppe befähigt sind, geeignet, wie z.B. Dimethylolpropionsäure, Dimethylolbuttersäure, Hydroxypivalinsäure, Umsetzungsprodukte von (Meth-)acrylsäure und Polyaminen (z.B. DE-A-19 750 186, S. 2, Z. 52 - 57) oder Sulfonatgruppen enthaltende Polyolkomponenten wie z.B. das propoxylierte Addukt von Natriumhydrogensulfit an 2-Butendiol oder die in der EP-A 0 364 331 (S. 6, Z. 1 - 6) beschriebenen, aus Salzen der Sulfoisophthalsäure aufgebauten Polyester. Bevorzugt sind carboxylsäuregruppenhaltige Komponenten. Besonders bevorzugt ist die Dimethylolpropionsäure.

Als Neutralisationskomponenten für die anionischen Dispersionen eigenen sich die dem Fachmann bekannten tertiären Amine, Ammoniak sowie Alkalihydroxide.

Bevorzugt enthält das NCO-Präpolymer keine nichtionischen Hydrophilierungsmittel.

Als Kettenverlängerer e) kommen Polyamine mit einem Molgewicht $M_n$ unter 500 g/mol in Frage, wie z.B. Ethylendiamin, 1,2-Diaminopropan, 1,4-Diaminobutan, 1,6-Hexamethylendiamin, 2-Methyl-pentandiamin-1,5, Isophorondiamin, 4,4'-Diaminodicyclohexylmethan, Piperazin, $N^2$-Methyl-diethylentriamin oder Diethylentriamin. Bevorzugt sind die Diamine Ethylendiamin, 2-Methylpentandiamin-1,5 oder Isophorondiamin.

Als Komponente f) kommen monofunktionelle Alkohole mit 1 bis 18, bevorzugt 1 bis 12, besonders bevorzugt 1 - 8 Kohlenstoffatomen in Betracht. Hierzu zählen beispielsweise Methanol, Ethanol, 1-Propanol, 2-Propanol, primäres Butanol, sekundäres Butanol, n-Hexanol und dessen Isomere, 2-Ethylhexylalkohol, Ethylenglykolmonomethylether, Diethylenglykolmonomethylether, Ethylenglykolmonobutylether, Diethylenglykolmonobutylether, Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, 1-Octanol, 1-Dodecanol, 1-Hexadecanol, Laurylalkohol sowie Stearylalkohol. Als bevorzugte Komponenten f) gelten Ethanol, 1-Propanol, 2-Propanol, primäres Butanol, sekundäres Butanol, n-Hexanol und dessen Isomere, 2-Ethylhexylalkohol, Ethylenglykolmonomethylether, Diethylenglykolmonomethylether, Ethylenglykolmonobutylether und Diethylenglykolmonobutylether. Als besonders bevorzugte Komponenten f) gelten n-Butanol, n-Hexanol, 2-Ethylhexylalkohol, Ethylenglykolmonobutylether oder Ethylenglykolmonomethylether.

Als Monoamine g) kommen solche in Frage, die ein Molgewicht unter 147 g/mol aufweisen, wie z.B. Ammoniak, Methylamin, Ethylamin, Diethylamin, Propylamin, n-Butylamin, Dibutylamin, 2-Aminobutan, 1-Aminopentan, 2-Aminopentan, Ethanolamin, Diethanolamin, 1-Amino-2-propanol, 3-Amino-1-propanol, 2-Amino-1-butanol, 5-Amino-1-pentanol. Zu den bervorzugte Monomamine g) zählen n-Butylamin, 2-Aminobutan, 1-Aminopentan, 2-Aminopentan, Ethanolamin oder Diethanolamin. Ganz besonders bevorzugte Komponenten g) sind n-Butylamin oder Diethanolamin.

Als Lösungsmittel zur Herstellung der Polyurethandispersion I) kommen solche in Frage, die bei Normaldruck unterhalb von 100°C sieden, keine gegenüber Isocyanaten reaktive Gruppen aufweisen und darüber hinaus wasserlöslich sind. Zudem muss das Lösungsmittel aus der hergestellten Dispersion destillativ entfernbar sein. Beispiele solcher Lösungsmittel sind Aceton, Methylethylketon, tert.-Butyl-methylether oder Tetrahydrofuran. Bevorzugt wird Methylethylketon oder Aceton als Lösungsmittel verwendet, besonders bevorzugt ist Aceton.

Die Lösemittelmenge wird so gewählt, dass das Präpolymer vor dem Dispergierschritt einen gewichtsmäßigen Anteil zwischen 66 % und 98 % einnimmt.

Ebenfalls Gegenstand der vorliegenden Erfindung ist ein Verfahren zur Herstellung der erfindungsgemäßen wässrigen Polyurethandispersionen dadurch gekennzeichnet, dass

I) eine Polyurethandispersion ohne Zusatz von Hydrazin hergestellt wird, wobei

I.1) zunächst in einem ersten Schritt eine NCO-Präpolymer-Lösung in einer Konzentration von 66 bis 98 % eines bei Normaldruck einen Siedepunkt unterhalb 100°C aufweisenden Lösemittels durch Umsetzung der Komponenten a), b), c) und d) erhalten wird,

I.2) in einem zweiten Schritt das NCO-Präpolymer I.1) in Wasser dispergiert wird, wobei vor, während oder nach der Dispergierung eine zumindest teilweise Neutralisation der ionischen Gruppen erfolgt,

I.3) in einem dritten Schritt eine Kettenverlängerung mit der Komponente e) erfolgt und

I.4) in einem vierten Schritt das Lösungsmittel destillativ entfernt wird,

mit der Maßgabe, dass die Komponente f) in Schritt I.1) oder die Komponente g) in Schritt I.3), bevorzugt die Komponente f) in Schritt I.1) und Komponente g) in Schritt I.3) und besonders bevorzugt nur die Komponente f) in Schritt I.1) eingesetzt wird.

In Schritt I.1) des Verfahrens zur Herstellung der erfindungsgemäßen Polyurethandispersionen sollte das NCO-Präpolymer eine NCO-Funktionalität von < 2,3 aufweisen. Das Lösungsmittel kann vor, während oder nach der Prepolymerisierung in der Menge zugesetzt werden, dass eine 66 bis 98 %ige Lösung, bevorzugt 75 bis 95 %ige Lösung entsteht. Ein zur Neutralisation der potentiell ionischen Gruppen notwendiges Neutralisationsmittel kann bereits zu Beginn der Reaktion anwesend sein, muss aber spätestens, sofern es nicht dem Dispergierwasser zugesetzt wird, dem fertigen Prepolymer hinzugefügt werden. Die Menge des Neutralisationsamins kann aber auch vor der Dispergierung zwischen organischer und wässriger Phase aufgeteilt werden.

In Schritt I.2) des Verfahrens erfolgt die Dispergierung, bei der entweder das Wasser dem Harz oder umgekehrt das Harz dem Wasser unter ausreichenden Scherbedingungen zugesetzt wird.

Im dritten Schritt I.3) wird die Kettenverlängerung durchgeführt, wobei die Menge der stickstoffhaltigen, isocyantreaktiven Komponente(-n) e) und g) als wässrige Lösung so bemessen wird, dass 25 bis 105 %, bevorzugt 50 bis 100 %, besonders bevorzugt 55 bis 90 % der Isocyanatgruppen abreagieren können. Die Amine e) und g) können auch als Lösung im zur Herstellung des Prepolymer verwendeten Lösungsmittel der Dispersion zugesetzt werden. Die unter Umständen verbleibenden Isocyanatgruppen reagieren unter Kettenverlängerung mit dem anwesenden Wasser. Die vollständige destillative Entfernung des Lösungsmittels erfolgt vorzugsweise im Vakuum und bildet den vierten Schritt I.4).

Der Feststoffgehalt der lösemittelfreien Dispersion liegt zwischen 25 bis 65 Gew.-%. Bevorzugt ist ein Feststoffgehalt von 30 bis 50 Gew.-%, besonders bevorzugt von 34 bis 45 Gew.-%.

Ebenfalls Gegenstand der vorliegenden Erfindung sind Beschichtungsmittel enthaltend die erfindungsgemäßen Polyurethandispersionen (I).

Die erhaltenen Beschichtungsmittel, enthaltend die erfindungsgemäßen Polyurethandispersionen, können als physikalisch trocknendes Einkomponenten-System (1K) oder auch als Zweikomponenten-System (2K) appliziert werden.

Gegenstand der vorliegenden Erfindung ist somit auch die Verwendung der erfindungsgemäßen Polyurethandispersionen als Bindemittel in IK-Systemen oder als Bindemittel-Bestandteil in einem 2K-System.

Bei den 2K-Systemen wird eine Aushärtung der erfindungsgemäßen Dispersionen bevorzugt mit den dem Fachmann bekannten hydrophilen und/oder hydrophoben Lackpolyisocyanaten durchgeführt. Bei Verwendung der Lackpolyisocyanate kann es notwendig werden, diese mit weiteren Colösermengen zu verdünnen, um eine gute Vermischung der Polyisocyanate mit der Dispersion zu erreichen. Als Lösungsmittel kommen hier gegenüber Isocyanatgruppen unreaktive Lösungsmittel wie z.B. Ethylglykoldimethylether, Triethylglykoldimethylether, Diethylglykoldimethylether, Proglyde® DMM (Dipropylenglykoldimethylether), Butylacetat oder Methoxybutylacetat in Frage.

Die erfindungsgemäßen Beschichtungsmittel können nach der Formulierung mit Coaleszenzmitteln auf beliebige Substrate aufgebracht werden, z.B. Holz, Metall, Kunststoff, Papier, Leder, Textilien, Filz, Glas oder mineralische Untergründe sowie auch auf bereits beschichtete Untergründe. Eine besonders bevorzugte Anwendung ist die Verwendung der erfindungsgemäßen Polyurethandispersionen als wässrige Beschichtungsmittel zur Herstellung von Beschichtungen auf Holz, Kunststoffen oder offenporigen, mineralischen Untergründen.

Gegenstand der vorliegenden Erfindung sind auch Substrate mit ein oder mehreren Beschichtungen, dadurch gekennzeichnet, dass mindestens eine Beschichtung hergestellt wurde durch Auftrag eines Beschichtungsmittels enthaltend die erfindungsgemäßen Polyurethandispersionen.

Als Coaleszenzmittel eignen sich z.B. OH-monofunktionelle ethylen- oder propylenglykolische Ether oder eine Mischung solcher Ether. Beispiele für solche OH-monofunktionellen ethylen- oder propylenglykolischen Ether sind Ethylglykolmethylether, Ethylglykolethylether, Diethylglykolethylether, Diethylglykolmethylether, Triethylglykolmethylether, Butylglykol, Butyldiglykol, Propylenglykolmonomethylether, Dipropylenglykolmonomethylether, Propylenglykolmonobutylether, Propylenglykolmonopropylether, Dipropylenglykolmonopropylether oder Propylenglykolbutylether. Als weitere Coaleszenzhilfsmittel kommen Ethylglykoldimethylether, Triethylglykoldimethylether, Diethylglykoldimethylether sowie Proglyde® DMM (Dipropylen-glykoldimethylether) in Betracht. Bevorzugt sind Ethylglykolmethylether, Butylglykol, Butyldiglykol, Propylenglykolmonomethylether und Propylenglykolmonobutylether

Die erfindungsgemäßen Beschichtungsmittel können als solche oder in Kombination mit weiteren, aus der Lacktechnologie bekannten Hilfs- und Zusatzmitteln wie z.B. Füllstoffen und Pigmenten verwendet werden.

Der Auftrag der Beschichtungsmittel, enthaltend die erfindungsgemäße Polyurethandispersion, kann auf bekannte Weise, z.B. durch Streichen, Gießen, Rakeln, Spritzen, Sprühen, Schleudern, Walzen oder Tauchen erfolgen.

**Beispiele**

**Tabelle 1:** Eingesetzte Komponenten

| Handelsname | Bezeichnung | Hersteller |
|---|---|---|
| Desmodur® W | 4,4'-Diisocyanatodicyclohexylmethan | Bayer MaterialScience AG, Leverkusen, Deutschland |
| Desmodur® I | Isophorondiisocyanat | Bayer MaterialScience AG, Leverkusen, Deutschland |
| Desmophen® C 1200 | Polycarbonatester, F = 2 , OHZ ≈ 56 mg KOH/g,, | Bayer MaterialScience AG, Leverkusen, Deutschland |
| Arcol® PPG 1000 | Polypropylenglykol, F = 2, OHZ ≈ 112 mg KOH/g | Bayer MaterialScience AG, Leverkusen, Deutschland |
| Rewomid® DC 212 S | Kokosölfettsäurediethanolamid, F ≈ 2, OHZ ≈ 292 | Tego Chemie, Essen, Deutschland |

**Dispersion 1 (erfindungsgemäß)**

205,5 g eines Polyester (Adipinsäure, 1,6-Hexandiol; OH-Zahl 66 mg KOH/g), 19 g Dimethylolpropionsäure und 58,0 g 1,6-Hexandiol wurden bei 110°C im Vakuum entwässert. Dann wurde auf 55°C abgekühlt, nacheinander mit 124,2 g Aceton und 226,9 g Desmodur® I versetzt und unter Rückfluss gekocht, bis ein NCO-Gehalt von 3,9 Gew.-% (theo. NCO-Gehalt 4,0 %) erreicht war. Es wurde erneut auf 55°C eingestellt und die klare Lösung wurde mit 12,9 g Triethylamin, das gut verrührt wurde, versetzt. Die gesamte neutralisierte Prepolymerlösung (55°C) wurden unter heftigem Rühren in 646 g Wasser, das bei einer Temperatur von 30°C vorlag, dispergiert. Nach der Dispergierung wurde 5 Min. nachgerührt, bevor innerhalb von 5 Min. eine Lösung aus 8,0 g Ethylendiamin und 5,2 g 26 %-iger wässriger $NH_3$-Lösung gelöst in 72,0 g Wasser zugegeben wurde. Im Anschluss daran wurde das Aceton bei 40°C im Vakuum (120 mbar) destillativ entfernt. Zur Reaktion der verbliebenen Isocyanatgruppen wurde bei 40°C gerührt, bis IR-spektroskopisch keine NCO-Gruppen mehr nachweisbar waren. Nach Abkühlen auf 30°C wurde durch ein 240 $\mu$m Schnellfilter filtriert.

**Kenndaten der Polyurethan-Dispersion:**

| | |
|---|---|
| Mittlere Teilchengröße : | 65 nm |
| pH (20°C) (10%ige wässrige Lsg.): | 7,8 |
| Hartsegmentgehalt: | 60 % |
| Säurezahl (bezogen auf Festharz): | 15,5 mg KOH/g |

**Dispersion 2 (erfindungsgemäß)**

205,5 g eines Polyester (Adipinsäure, 1,6-Hexandiol; OH-Zahl 66 mg KOH/g), 19 g Dimethylolpropionsäure und 58,0 g 1,6-Hexandiol wurden bei 110°C im Vakuum entwässert. Dann wurde auf 55°C abgekühlt, nacheinander mit 124,2 g Aceton und 226,9 g Desmodur® I versetzt und unter Rückfluss gekocht, bis ein NCO-Gehalt von 3,9 Gew.-% (theo. NCO-Gehalt 4,0 %) erreicht war. Es wurde erneut auf 55°C eingestellt und die klare Lösung wurde mit 12,9 g Triethylamin, das gut verrührt wurde, versetzt. Die gesamte neutralisierte Prepolymerlösung (55°C) wurden unter heftigem Rühren in 646 g Wasser, das bei einer Temperatur von 30°C vorlag, dispergiert. Nach der Dispergierung wurde 5 Min. nachgerührt, bevor innerhalb von 5 Min. eine Lösung aus 8,0 g Ethylendiamin und 5,8 g Butylamin gelöst in 72,0 g Wasser zugegeben wurde. Im Anschluss daran wurde das Aceton bei 40°C im Vakuum (120 mbar) destillativ entfernt. Zur Reaktion der verbliebenen Isocyanatgruppen wurde bei 40°C gerührt, bis IR-spektroskopisch kein NCO mehr nachweisbar war. Nach Abkühlen auf 30°C wurde durch ein 240 $\mu$m Schnellfilter filtriert.

**Kenndaten der Polyurethan-Dispersion:**

| | |
|---|---|
| Mittlere Teilchengröße : | 55 nm |
| pH (20°C) (10%ige wässrige Lsg.): | 8,0 |
| Hartsegmentgehalt: | 60 % |
| Säurezahl (bezogen auf Festharz): | 15,5 mg KOH/g |

**Dispersion 3 (nicht erfindungsgemäß)**

Eine Mischung aus 340,8 g Desmophen® C 1200, 33,0 g Dimethylolpropionsäure, 62,0 g Neopentylglykol, 1,9 g Ethylenglykolmonobutylether und 18,2 g Rewomid® DC 212 S in 241,1 g Aceton wurde auf 70 °C aufgeheizt und mit 407,0 g Desmodur® W versetzt. Dann wurden 24,8 g Triethylamin zugesetzt und bei 70° C gerührt, bis der NCO-Gehalt 3,4 % betrug. 900 g dieser Lösung wurden unter heftigem Rühren in 977 g Wasser, das bei einer Temperatur von 30 °C vorgelegt war, dispergiert. Nach Dispergierung wurde 5 Min. nachgerührt bevor innerhalb von 5 Min. eine Lösung von 8,0 g Diethylentriamin und 11,2 g Ethylendiamin in 100 g Wasser zugegeben wurde. Nach weiteren 10 Min. wurde das Aceton destillativ im Vakuum entfernt. Nach Abkühlen auf 30 °C wurde durch ein 240 μm Schnellfilter filtriert.

**Kenndaten der Polyurethan-Dispersion:**

| | |
|---|---|
| Mittlere Teilchengröße (LKS): | 49 nm |
| pH (20°C): | 8,2 |
| Festgehalt: | 35 % |
| Säurezahl (bezogen auf Festharz): | 16,0 mg KOH/g |
| Hartsegment-Gehalt: | 61,6 % |

**Vergleichsdispersion 4**

205,5 g eines Polyester (Adipinsäure, 1,6-Hexandiol; OH-Zahl 66 mg KOH/g), 19 g Dimethylolpropionsäure und 58,0 g 1,6-Hexandiol wurden bei 110°C im Vakuum entwässert. Dann wurde auf 55°C abgekühlt, nacheinander mit 124,2 g Aceton und 226,9 g Desmodur® I versetzt und unter Rückfluss gekocht, bis ein NCO-Gehalt von 3,9 Gew.-% (theo. NCO-Gehalt 4,0%) erreicht war. Es wurde erneut auf 55°C eingestellt und die klare Lösung wurde mit 12,9g Triethylamin, das gut verrührt wurde, versetzt. Die gesamte neutralisierte Prepolymerlösung (55°C) wurde unter heftigem Rühren in 646 g Wasser, das bei einer Temperatur von 30°C vorlag, dispergiert. Nach Dispergierung wurde 5 Min. nachgerührt, bevor innerhalb von 5 Min. eine Lösung aus 10,3 g Ethylendiamin, gelöst in 90 g Wasser, zugegeben wurde. Im Anschluss daran wurde das Aceton bei 40°C im Vakuum (120 mbar) destillativ entfernt. Zur Reaktion der verbliebenen Isocyanatgruppen wurde bei 40°C gerührt, bis IR-spektroskopisch kein NCO mehr nachweisbar war. Nach Abkühlen auf 30°C wurde durch ein 240 μm Schnellfilter filtriert.

| | |
|---|---|
| Mittlere Teilchengröße : | 65 nm |
| pH (20°C) (10%ige wässrige Lsg.): | 7,8 |
| Hartsegmentgehalt: | 60 % |

**Vergleichsdispersion 5**

Eine Mischung aus 340,8 g Desmophen® C 1200, 33,0 g Dimethylolpropionsäure, 62,9 g Neopentylglykol und 18,2 g Rewomid® DC 212 S in 241,1 g Aceton wurde auf 70 °C aufgeheizt und mit 407,0 g Desmodur® W versetzt. Dann wurden 24,8 g Triethylamin zugesetzt und bei 70° C gerührt, bis der NCO-Gehalt 3,4 % betrug. 900 g dieser Lösung wurden unter heftigem Rühren in 977 g Wasser, das bei einer Temperatur von 30 °C vorgelegt war, dispergiert. Nach Dispergierung wurde 5 Min. nachgerührt bevor innerhalb von 5 Min. eine Lösung von 8,0 g Diethylentriamin und 11,2 g Ethylendiamin in 100 g Wasser zugegeben wurde. Nach weiteren 10 Min. wurde das Aceton destillativ im Vakuum entfernt. Nach Abkühlen auf 30 °C wurde durch ein 240 μm Schnellfilter filtriert.

**Kenndaten der Polyurethan-Dispersion:**

| | |
|---|---|
| Mittlere Teilchengröße (LKS): | 51 nm |
| pH (20°C): | 8,3 |
| Festgehalt: | 35 % |
| Hartsegmentgehalt: | 60,4 % |

**Tabelle 2: Lagerstabilität**

| | Dispersion 1, 2 erfindungsgemäß | Vergleichsdispersion 4 | Vergleichsdispersion 5 |
|---|---|---|---|
| 6 Wochen 40°C | Keine Veränderung | Bodensatz | Bodensatz |

(fortgesetzt)

| | Dispersion 1, 2 erfindungsgemäß | Vergleichsdispersion 4 | Vergleichsdispersion 5 |
|---|---|---|---|
| 16 Wochen 20°C | Keine Veränderung | Leichter Bodensatz | Leichter Bodensatz |

**Patentansprüche**

1. Wässrige Polyurethandispersionen (I) enthaltend als Aufbaukomponenten

   a) Polyisocyanate,
   b) Polyole mit mittleren Molgewichten Mn von 500 bis 6000 g/mol,
   c) Polyole mit mittleren Molgewichten Mn von 62 bis 500 g/mol,
   d) Verbindungen, die eine ionische Gruppe oder eine zur Ausbildung einer ionischen Gruppe befähigte Gruppe enthält/enthalten,
   e) Polyamine mit mittleren Molekulargewichten Mn unter 500 g/mol, ausgenommen Hydrazin, sowie
   f) Monoalkohole) mit mittleren Molgewichten Mn von 32 bis 145 g/mol und/oder
   g) Monoaminen mit mittleren Molgewichten Mn von kleiner 147 g/mol, wobei der Anteil an f) und/oder g) mindestens 0,4 bis 1,26 Gew.-% und der Anteil der Komponente c) 9 - 17 Gew.-% beträgt und der Hartsegmentanteil der Polyurethan-Dispersion zwischen 58 bis 80 Gew.-% liegt und wobei die Dispersion nur die Komponente b) in Mengen von 20 bis 42 Gew.-% aufweist und sich alle Angaben auf die Harzmenge der Polyurethan-Dispersion (I) beziehen und die Polyurethan-Dispersion frei von N-Methylpyrrolidon ist.

2. Verfahren zur Herstellung der wässrigen Polyurethandispersionen gemäß Anspruch 1 **dadurch gekennzeichnet, dass**

   I) eine Polyurethandispersion ohne Zusatz von Hydrazin hergestellt wird, wobei

   I.1) zunächst in einem ersten Schritt eine NCO-Präpolymer-Lösung in einer Konzentration von 66 bis 98 % eines bei Normaldruck einen Siedepunkt unterhalb 100°C aufweisenden Lösemittels durch Umsetzung der Komponenten a), b), c) und d) erhalten wird,
   I.2) in einem zweiten Schritt das NCO-Präpolymer I.1) in Wasser dispergiert wird, wobei vor, während oder nach der Dispergierung eine zumindest teilweise Neutralisation der ionischen Gruppen erfolgt,
   I.3) in einem dritten Schritt eine Kettenverlängerung mit der Komponente e) erfolgt und
   I.4) in einem vierten Schritt das Lösungsmittel destillativ entfernt wird, mit der Maßgabe, dass die Komponente f) in Schritt I.1) oder die Komponente g) in Schritt 1.3 eingesetzt wird.

3. Verfahren gemäß Anspruch 2, **dadurch gekennzeichnet, dass** die Komponente f) in Schritt I.1) und Komponente g) in Schritt I.3) eingesetzt wird.

4. Verfahren gemäß Anspruch 2, **dadurch gekennzeichnet, dass** die Komponente f) in Schritt I.1) eingesetzt wird.

5. Verwendung der wässrigen Polyurethandispersionen gemäß Anspruch 1 als Bindemittel in Einkomponenten(1K)-Systemen.

6. Verwendung der wässrigen Polyurethandispersionen gemäß Anspruch 1 als Bindemittel-Bestandteil in einem Zweikomponenten(2K)-System.

7. Verwendung der wässrigen Polyurethandispersionen gemäß Anspruch 1 als wässrige Beschichtungsmittel zur Herstellung von Beschichtungen auf Holz, Kunststoffen oder offenporigen, mineralischen Untergründen.

**Claims**

1. Aqueous polyurethane dispersions (I), containing as components

   a) polyisocyanates,
   b) polyols having average molecular weights Mn of 500 to 6000 g/mol,

c) polyols having average molecular weights Mn of 62 to 500 g/mol,

d) compounds which contains/contain an ionic group or a group capable of forming an ionic group,

e) polyamines having average molecular weights Mn of less than 500 g/mol, except hydrazine, and

f) monoalcohols) having average molecular weights Mn of 32 to 145 g/mol and/or

g) monoamines having average molecular weights Mn of less than 147 g/mol, wherein the proportion of f) and/or g) is at least 0.4 to 1.26 wt.% and the proportion of component c) is 9 - 17 wt.% and the hard segment content of the polyurethane dispersion is between 58 and 80 wt.% and wherein the dispersion contains only component b) in quantities of 20 to 42 wt.% and all data refer to the amount of resin of the polyurethane dispersion (I) and the polyurethane dispersion is free from N-methylpyrrolidone.

2. A process for the production of the aqueous polyurethane dispersions according to claim 1, **characterised in that**

I) a polyurethane dispersion is produced without the addition of hydrazine, wherein

I.1) initially in a first step an NCO prepolymer solution is obtained in a concentration of 66 to 98% of a solvent having a boiling point of less than 100°C at standard pressure by reaction of components a), b), c) and d),

I.2) in a second step the NCO prepolymer I.1) is dispersed in water, at least partial neutralisation of the ionic groups taking place before, during or after the dispersing,

I.3) in a third step, a chain extension with component e) takes place and

I.4) in a fourth step, the solvent is removed by distillation, with the proviso that component f) is used in step I.1) or component g) in step I.3.

3. The process according to claim 2, **characterised in that** component f) is used in step I.1) and component g) in step I.3).

4. The process according to claim 2, **characterised in that** component f) is used in step I.1).

5. Use of the aqueous polyurethane dispersions according to claim 1 as binders in one-pack (1K) systems.

6. Use of the aqueous polyurethane dispersions according to claim 1 as binder component in a two-pack (2K) system.

7. Use of the aqueous polyurethane dispersions according to claim 1 as aqueous coating compositions for the production of coatings on wood, plastics or open-pored mineral substrates.

**Revendications**

1. Dispersions aqueuses de polyuréthanne (I), contenant comme constituants

a) des polyisocyanates,

b) des polyols de poids moléculaires moyens $M_n$ allant de 500 à 6000 g/mol,

c) des polyols de poids moléculaires moyens $M_n$ allant de 62 à 500 g/mol,

d) des composés qui contiennent un groupe ionique ou un groupe capable de former un groupe ionique,

e) des polyamines de poids moléculaires moyens $M_n$ inférieurs à 500 g/mol excepté l'hydrazine, ainsi que

f) des monoalcools de poids moléculaires moyens $M_n$ allant de 32 à 145 g/mol et/ou

g) des monoamines de poids moléculaires moyens $M_n$ inférieurs à 147 g/mol, la proportion de f) et/ou de g) s'élevant au moins à une valeur de 0,4 à 1,26 % en poids et la proportion de composant c) s'élevant à 9-17 % en poids, la proportion de segment dur de la dispersion de polyuréthanne étant comprise entre 58 et 80 % en poids et la dispersion ne contenant que le composant b) en quantités de 20 à 42 % en poids, toutes les indications se rapportant à la quantité de résine de la dispersion de polyuréthanne (I) et la dispersion de polyuréthanne étant dépourvue de N-méthylpyrrolidone.

2. Procédé de production des dispersions aqueuses de polyuréthanne suivant la revendication 1, **caractérisé en ce que**

I) une dispersion de polyuréthanne sans addition d'hydrazine est préparée, de façon telle que

I.1) dans une première étape, une solution de NCO-prépolymère à une concentration de 66 à 98 % d'un solvant présentant un point d'ébullition inférieur à 100°C à la pression normale est tout d'abord obtenue par réaction des composants a), b), c) et d),

I.2) dans une deuxième étape, le NCO-prépolymère I.1) est dispersé dans l'eau, une neutralisation au moins partielle des groupes ioniques se produisant avant, pendant ou après la dispersion,

I.3) dans une troisièmme étape, un allongement de chaîne avec le composant e) a lieu et

I.4) dans une quatrième étape, le solvant est chassé par distillation, sous réserve que le composant f) soit utilisé dans l'étape I.1) ou que le composant g) soit utilisé dans l'étape I.3).

3. Procédé suivant la revendication 2, **caractérisé en ce que** le composant f) est utilisé dans l'étape I.1) et le composant g) est utilisé dans l'étape I.3).

4. Procédé suivant la revendication 2, **caractérisé en ce que** le composant f) est utilisé dans l'étape I.1).

5. Utilisation des dispersions aqueuses de polyuréthanne suivant la revendication 1 comme liants dans des systèmes à un seul composant (1C).

6. Utilisation des dispersions aqueuses de polyuréthanne suivant la revendication 1 comme composant-liant dans un système à deux composants (2C)

7. Utilisation des dispersions aqueuses de polyuréthanne suivant la revendication 1 comme produits aqueux d'enduction pour la réalisation de revêtements sur du bois, des matières plastiques ou des substrats minéraux à pores ouverts.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 801086 A
- DE 19930961 A1
- DE 102005019397 A1
- EP 510438 A
- EP 0017199 A
- DE 19750186 A
- EP 0364331 A